(19) Europäisches Patentamt
European Patent Office
Office européen des brevets

(11) **EP 3 131 229 B1**

(12) **FASCICULE DE BREVET EUROPEEN**

(45) Date de publication et mention
de la délivrance du brevet:
**07.03.2018 Bulletin 2018/10**

(51) Int Cl.:
*H04L 9/08* ^(2006.01)      *H04L 29/06* ^(2006.01)
*H04L 29/08* ^(2006.01)      *H04W 4/06* ^(2009.01)
*H04W 12/04* ^(2009.01)      *H04W 80/00* ^(2009.01)

(21) Numéro de dépôt: **16183493.2**

(22) Date de dépôt: **10.08.2016**

(54) **PROCÉDÉ DE GÉNÉRATION DE CLÉ SECRÈTE DE GROUPE BASÉE SUR LA COUCHE PHYSIQUE RADIO ET TERMINAL SANS-FIL ASSOCIÉ**

VERFAHREN ZUR ERZEUGUNG EINES GRUPPENSICHERHEITSSCHLÜSSELS, DER AUF DER PHYSIKALISCHEN FUNKSCHICHT BASIERT, UND ENTSPRECHENDES DRAHTLOSES ENDGERÄT

METHOD FOR GENERATING A GROUP SECRET KEY BASED ON THE PHYSICAL RADIO LAYER AND ASSOCIATED WIRELESS TERMINAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.08.2015 FR 1557728**

(43) Date de publication de la demande:
**15.02.2017 Bulletin 2017/07**

(73) Titulaire: **Commissariat à l'énergie atomique et aux énergies alternatives
75015 Paris (FR)**

(72) Inventeurs:
• **TUNARU, Iulia
38000 Grenoble (FR)**

• **DENIS, Benoît
38000 Grenoble (FR)**
• **PERRIER, Régis
38700 La Tronche (FR)**

(74) Mandataire: **Brevalex
95, rue d'Amsterdam
75378 Paris Cedex 8 (FR)**

(56) Documents cités:
**WO-A2-2006/130725      WO-A2-2008/045532
DE-A1-102012 215 326      US-A1- 2008 075 280
US-A1- 2008 089 518**

EP 3 131 229 B1

## Description

## DOMAINE TECHNIQUE

Le domaine de l'invention est celui des communications sans fil sécurisées au moyen d'une clé secrète partagée entre une partie émettrice et une partie réceptrice. L'invention concerne plus particulièrement une génération de clé secrète de groupe exploitant les seules caractéristiques de la couche physique de transmission radio.

## ÉTAT DE LA TECHNIQUE ANTÉRIEURE

La sécurité et la confidentialité des communications constituent deux enjeux majeurs au sein des réseaux de communication sans fil afin d'assurer au mieux la collecte, la transmission et l'échange de données sensibles et/ou personnelles.

Une première technique de sécurisation consiste à utiliser un couple formé d'une clé publique et d'une clé secrète (cryptographie asymétrique) permettant d'assurer des fonctions d'authentification et/ou de distribution d'autres clés secrètes, typiquement symétriques (par exemple des clés de session), ces dernières assurant le chiffrement des communications. Toutefois, cette technique impose d'avoir recours à une entité centralisée pour distribuer, rafraichir ou révoquer les clés ou les signatures. Ce dernier aspect pose d'ailleurs problème dans le contexte de réseaux distribués, autorisant de faibles portées de transmission radio et/ou présentant des topologies de réseau changeantes (par exemple du fait de la mobilité des noeuds radio). En outre, les algorithmes mis en oeuvre sont complexes et utilisent d'importantes ressources de calcul alors même que les terminaux peuvent ne disposer que de ressources limitées (énergétiques, calculatoires).

Une autre technique de sécurisation consiste à chiffrer les communications à l'aide d'une clé secrète symétrique (cryptographie symétrique). La clé secrète doit alors être partagée entre la partie émettrice (conventionnellement appelée Alice) et la partie réceptrice (conventionnellement appelée Bob) et ne pas pouvoir être directement interceptée, ni devinée sur la base d'observations réalisées localement, par un espion (« eavesdropper ») éventuel (conventionnellement appelé Eve). Cette technique suppose donc un accord préalable entre Bob et Alice sur la clé secrète, ce qui en pratique pose des problèmes de distribution. Qui plus est, la clé secrète doit pouvoir être renouvelée régulièrement de manière sécurisée.

On connait ainsi une solution qui consiste à générer des clés secrètes à partir des seules propriétés du lien de communication sans fil à protéger. Selon cette solution, les terminaux d'Alice et de Bob viennent mesurer certaines métriques radios (par exemple, les réponses impulsionnelles du canal de communication reliant les terminaux, ou des séquences de puissance reçue) afin d'extraire une clé secrète commune.

Cette solution tire parti de la réciprocité bidirectionnelle entre le lien direct et la voie retour et de la décorrélation "spatiale" des canaux de communication sans fil. Plus précisément, la réponse impulsionnelle du canal de communication entre Bob et Alice est théoriquement identique, au bruit près, à celle du canal de communication entre Alice et Bob. Alice et Bob peuvent donc séparément élaborer la même clé secrète à partir d'une estimation du canal de communication les reliant, réalisée de part et d'autre du lien. Par ailleurs, dès lors que le terminal d'Eve est situé à plus de quelques longueurs d'onde de celui de Bob (dans le cas des communications bande-étroite), le canal de communication entre Alice et Eve (respectivement entre Bob et Eve) a des caractéristiques décorrélées de celui entre Alice et Bob (respectivement entre Bob et Alice). Il n'est donc pas aisé pour Eve de générer la même clé secrète en écoutant simplement le canal entre Alice et elle-même ou entre Bob et elle-même. Enfin, le canal de communication entre Alice et Bob est généralement sujet à des variations temporelles de ses caractéristiques, notamment lorsque l'une ou l'autre des parties se déplace. La clé secrète peut ainsi être renouvelée, ou sa longueur peut être augmentée

Cette solution fournit ainsi une clé symétrique partagée par deux terminaux et générée à partir d'un seul lien de communication. La sécurité serait cependant augmentée s'il était possible de générer la clé à partir de mesures plus entropiques que celles réalisées sur un unique lien de communication entre deux terminaux. Pour cela, on peut chercher à étendre le procédé de génération de clé à plusieurs terminaux afin d'exploiter plus de liens physiques et de générer une clé partagée par un groupe de terminaux permettant une sécurisation des communications entre les terminaux du groupe.

La demande de brevet US 2008/0075280 A1 expose ainsi un procédé de génération de clé de groupe. Selon ce procédé, des clés pair-à-pair, partagées par seulement deux terminaux du groupe, sont tout d'abord générées. Puis une clé de groupe est propagée dans le réseau de terminaux en utilisant ces clés pair-à-pair et des calculs de graphe itératifs. La longueur de la clé de groupe est toutefois limitée par la longueur minimale de chacune des clés pair-à-pair, ce qui limite les performances en matière de sécurisation et/ou ne permet pas de couvrir les besoins applicatifs exprimés à plus haut niveau (par exemple une application pouvant requérir une longueur a priori).

Le demande de brevet Internationale WO 2008/045532 A2 expose un procédé de génération d'une clé partagée secrète utilisable par des terminaux, à partir de caractéristiques de canaux de communication sans fil. Une unité spéciale acquise des signaux depuis les canaux de communication sans fil, reliés cette unité au terminaux et génère une représentation de chaque canal adjacent. Par la suite, un clé secrète à partir d'une combinaison des représentations des canaux adjacents est déterminé.

## EXPOSÉ DE L'INVENTION

L'invention vise à étendre à un groupe de terminaux la technique de génération de clé secrète pair-à-pair exploitant un unique lien de communication. L'objectif est d'exploiter la diversité des différents liens d'une topologie de réseau maillé afin de générer une clé de groupe dont la longueur peut être arbitrairement grande, et ce tout en évitant d'avoir à générer des clés pair-à-pair intermédiaires.

L'invention propose pour ce faire un procédé de génération d'une clé secrète partagée par un groupe d'au moins trois terminaux à partir de caractéristiques de canaux de communication sans fil reliant deux à deux lesdits terminaux, comprenant, à chacun desdits terminaux du groupe, la mise en oeuvre des étapes suivantes :

-   acquisition de signaux depuis les canaux de communication sans fil, dits canaux adjacents, reliés au terminal et génération d'une représentation de chaque canal adjacent;
-   pour l'au moins un canal de communication sans fil, dit canal non-adjacent, non relié au terminal, acquisition d'au moins une image du canal non-adjacent et génération d'une représentation du canal non-adjacent,
-   détermination de la clé secrète à partir d'une combinaison des représentations des canaux adjacents et de l'au moins une représentation de canal non-adjacent.

Certains aspects préférés mais non limitatifs de ce procédé sont les suivants :

-   il comprend à un terminal dit émetteur les étapes suivantes :

    ◦ estimation d'un canal adjacent reliant le terminal émetteur à un terminal destinataire à partir des signaux acquis depuis le canal adjacent ;
    ◦ génération d'un signal porteur d'une image d'un canal non-adjacent du terminal destinataire à partir des signaux acquis par le terminal émetteur depuis le canal non-adjacent du terminal destinataire et de l'estimation du canal adjacent reliant le terminal émetteur et le terminal destinataire; et
    ◦ transmission dudit signal porteur d'une image de canal non-adjacent au terminal destinataire ;

-   il comprend deux acquisitions par un terminal, pour un canal non-adjacent, d'une image du canal non-adjacent, chaque acquisition étant respectivement issue d'une transmission par l'un des deux terminaux reliés par le canal non adjacent ;
-   le terminal réalise un traitement des deux acquisitions d'une image du canal non-adjacent pour générer une unique représentation du canal non-adjacent ;
-   le terminal évalue une asymétrie de représentation de canal à partir des deux acquisitions d'une image du canal non-adjacent, et transmet une information d'asymétrie de représentation de canal aux terminaux reliés par le canal non-adjacent ;
-   le terminal modifie une représentation de canal adjacent suite à la réception d'une information d'asymétrie de représentation de canal.

L'invention s'étend également à un terminal apte à générer une clé secrète conformément à l'invention.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

-   les figures 1 à 4 sont des schémas illustrant les différentes étapes du procédé selon l'invention ;
-   la figure 5 est un schéma d'un terminal de communication sans fil apte à générer une clé secrète conformément au procédé selon l'invention.

## EXPOSÉ DÉTAILLÉ DE MODES DE RÉALISATION PARTICULIERS

L'invention porte sur un procédé de génération d'une clé secrète partagée par un groupe d'au moins trois terminaux, la clé étant générée à partir de caractéristiques des canaux de communication sans fil reliant deux à deux lesdits terminaux.

Par terminal, on entend un équipement de communication fixe ou mobile, par exemple un terminal d'utilisateur, une station de base, un point d'accès local, un capteur, un objet communiquant. Les terminaux font partie d'un réseau de communication à topologie maillée dans lequel chaque terminal dispose d'une liaison point-à-point avec chacun des autres terminaux. Dans la suite de la description, on désigne par canal adjacent à un terminal un canal de communication sans fil relié au terminal, et on désigne par canal non-adjacent un canal de communication sans fil non relié au terminal et qui relie donc entre eux deux autres terminaux. Prenant l'exemple d'un réseau à trois terminaux A, B et C, les canaux A-B et A-C sont des canaux adjacents au terminal A tandis que le canal B-C est un canal non-adjacent au terminal A.

Le procédé selon l'invention repose sur l'idée générale de générer une clé secrète de groupe en venant réaliser au niveau de chaque terminal, non seulement une acquisition des canaux adjacents, mais également une observation des images des canaux non-adjacents.

Comme cela sera détaillé par la suite, des signaux spécifiques sont pour cela échangés afin de permettre à un terminal de disposer d'une image de ses canaux non-adjacents.

Pour le reste du document on utilisera la terminologie suivante.

On nommera « acquisition » ou « signal acquis » toute mesure directe issue d'un canal adjacent après un premier échantillonnage direct (pour une chaine classique de réception comprenant un convertisseur analogique-numérique), « estimation du canal » tout signal issu d'une étape de traitement sur le signal acquis pour déduire l'effet du canal physique sur les signaux transmis (concrètement, une estimation des multi-trajets par exemple), « représentation du canal» tout signal acquis traité dans le but de générer une « séquence binaire » amenée à constituer (après correction) la clé. A titre d'exemple, une estimation de canal peut être aussi une représentation du canal mais une représentation du canal n'est pas forcément une estimation.

D'une manière générale, toute transmission peut être modélisée par $cx(t) = (x * h)(t) + w(t)$ dans le domaine continu et par $cx[n] = (x * h)[n] + w[n]$ après acquisition via un échantillonnage, avec :

- $x(t)$ le signal transmis ;
- $cx(t)$ le signal acquis, issu de la convolution du signal transmis avec la réponse impulsionnelle du canal ;
- $h(t)$ la réponse impulsionnelle du canal (par exemple un peigne de Diracs $h(t) = \sum a_i \delta(t - t_i)$ avec $a_i$ et $t_i$ respectivement l'amplitude et le retard du i-ème multi-trajet) ;
- $w(t)$ le bruit additif en réception.

Le signal acquis $cx[n]$ peut être post-traité pour générer un autre signal $y[k]$, qui sera ensuite utilisé pour générer la clé à l'aide d'un algorithme de quantification.

Par simplicité de notation, on utilisera le domaine continu dans les équations suivantes alors que les étapes d'estimation, de post-traitement, etc. sont réalisées sur des versions échantillonnées des signaux.

Dans le cadre de l'invention, on distingue 2 types de transmissions :

- Transmissions, dans le but d'estimation du canal adjacent, d'un signal $x(t) = p(t)$ qui est un pilote connu par les deux parties (transmetteur et récepteur). Le signal acquis s'écrit $ch(t) = (p * h)(t) + w(t)$. A partir de $p(t)$ et de $ch(t)$, le récepteur estime la réponse impulsionnelle du canal $\hat{h}(t)$ (nommée « estimation de canal adjacent ») ;
- Transmissions, dans le but d'inférer un canal non-adjacent h', différent du canal de transmission direct $h$, d'un signal $x(t) = s(t)$ qui est porteur d'une image du canal non-adjacent. Le signal acquis s'écrit $r(t) = (s * h)(t) + w(t)$. Le signal $s(t)$ porteur d'une image du canal non-adjacent est calculé à partir de l'estimation du canal adjacent $h$ et de l'image visée de sorte que (au bruit près) $(p * h')(t) = (s * h)(t)$.

Le procédé sera par la suite décrit en prenant l'exemple d'un réseau constitué de trois terminaux A, B, C. L'invention n'est bien entendu pas limitée à cet exemple donné uniquement afin de simplifier la description et sa compréhension.

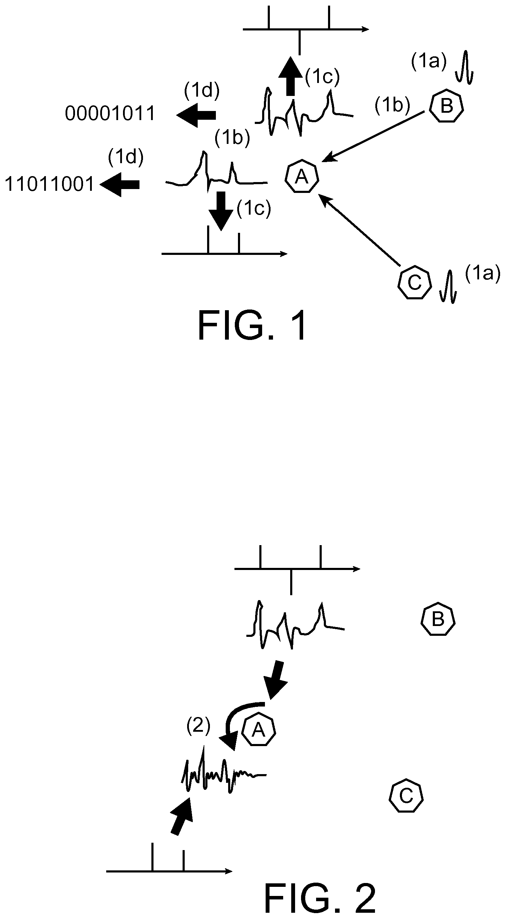

En référence à la figure 1, au cours d'une étape (1a), les terminaux B et C transmettent un signal de sondage des canaux de communication adjacents au terminal A, à savoir respectivement le canal B-A et le canal C-A. Ces transmissions peuvent être séquentielles (par exemple dans différents créneaux temporels dans une communication à accès multiple par répartition dans le temps) ou simultanées (par exemple à des fréquences différentes dans une communication à accès multiple par répartition en fréquence).

Au cours d'une étape (1b), le terminal A acquiert les signaux transmis par les terminaux B et C depuis les canaux adjacents et procède au cours d'une étape (1c) à une estimation des canaux adjacents.

Au cours d'une étape (1d), le terminal A procède, pour chacun des canaux adjacents B-A et C-A, à la génération d'une représentation du canal adjacent. Cette représentation sera ensuite transformée en une séquence binaire par une opération de quantification.

En référence à la figure 2, et au cours d'une étape (2), le terminal A utilise les signaux acquis à l'étape (1b) et les estimations des canaux adjacents réalisées à l'étape (1c) pour élaborer un signal porteur d'une information à laquelle ses voisins ne peuvent pas directement accéder. Par exemple, si le destinataire est le terminal C, le terminal A utilise le signal acquis depuis le canal B-A (avant estimation du canal) et l'estimation du canal C-A pour générer un signal spécifique à envoyer à C pour lui faire inférer le canal B-A (et pareil pour B). Ce signal spécifique est pour le terminal C un signal porteur d'une image du canal non adjacent (en l'occurrence le canal non adjacent B-A).

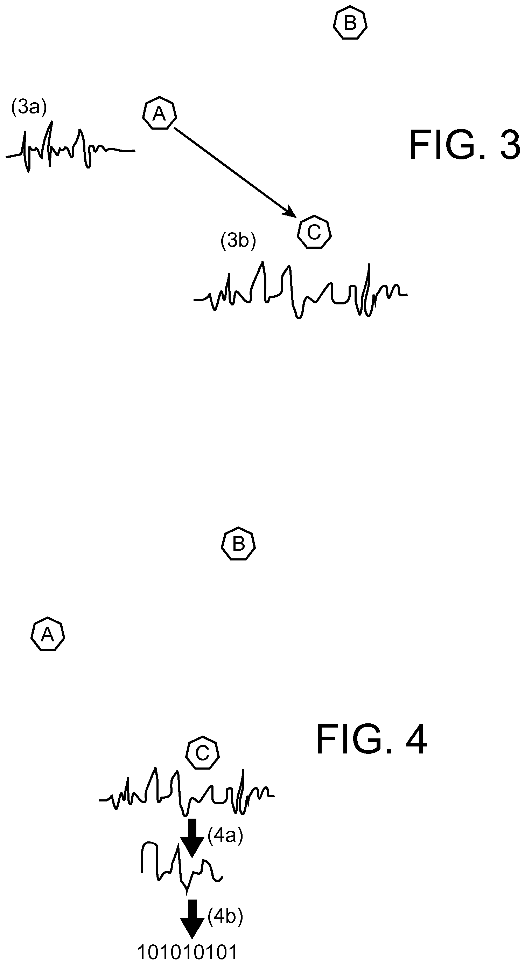

En référence à la figure 3, ce signal est transmis au cours d'une étape (3a) au terminal C afin de fournir une image du canal B-A non-adjacent à ce même terminal C. Au cours d'une étape (3b), le terminal C acquiert le signal transmis par le terminal A et qui est une image du canal B-A non-adjacent au terminal C.

En référence à la figure 4, au cours d'une étape (4a), le terminal C procède à la récupération d'une portion utile du signal acquis représentant l'image du canal B-A, par exemple au moyen d'un fenêtrage temporel. Au cours d'une étape (4b), le terminal C génère, à partir de l'observation directe de ce signal acquis, une représentation du canal non-adjacent B-A. Une séquence de bits peut ensuite être extraite de cette représentation de canal non-adjacent, par exemple au moyen d'une quantification.

Les différentes étapes mentionnées précédemment sont réitérées en venant à chaque itération effectuer une rotation des rôles de chacun des terminaux A, B et C. La réitération est poursuivie jusqu'à ce que chaque terminal dispose, pour chacun des canaux adjacents, de la séquence de bits représentative du canal adjacent et, pour chacun du ou des canaux non-adjacents, de la séquence de bits représentative du canal non-adjacent.

Chaque terminal vient combiner ces différentes séquences, par exemple en les concaténant, et exploite cette combinaison pour calculer la clé secrète. Un code correcteur d'erreur peut ensuite être appliqué à la combinaison des différentes séquences en venant échanger un minimum d'information sur un canal public.

On comprend de ce qui précède que le procédé selon l'invention comprend, à chacun desdits terminaux du groupe, la mise en oeuvre des étapes suivantes.

Chaque terminal procède d'abord à une acquisition des canaux adjacents et ensuite indépendamment: i) à une estimation (au sens extraction des composantes multi-trajets) des canaux de communication sans fil reliés au terminal (canaux adjacents) et ii) à la génération des représentations de ces canaux adjacents qui seront ensuite converties en séquences binaires représentatives des canaux adjacents.

Prenant l'exemple du terminal A, celui-procède ainsi à l'acquisition des canaux B-A et C-A. Ensuite, le terminal A, dit terminal émetteur, génère un signal porteur d'une image d'un canal B-A non-adjacent d'un terminal destinataire C à partir de l'observation directe (acquisition) du canal B-A non-adjacent du terminal destinataire C et de l'estimation du canal adjacent C-A reliant le terminal émetteur A et le terminal destinataire C. Le terminal émetteur A transmet ce signal porteur d'une image du canal B-A au terminal destinataire C.

Ce signal est ainsi construit comme le signal émis qui, une fois convolué avec l'estimation de canal C-A, va directement produire au niveau du récepteur C une image, idéalement la plus proche possible, du canal B-A précédemment acquis par A (i.e., avant estimation de canal). Pour construire ce signal à transmettre, le terminal A a donc besoin de l'estimation du canal C-A (typiquement sous la forme d'un peigne de Diracs pondérés) et de l'observation directe du canal B-A (i.e. de son acquisition).

Le terminal destinataire réceptionne, pour chaque canal de communication sans fil non relié au terminal (canal non-adjacent) au moins un signal image de ce même canal non-adjacent. Ainsi, lors d'une réitération des étapes illustrées sur les figues 1 à 4, c'est au tour du terminal A d'acquérir sur le canal B-A un signal image du canal C-B non-adjacent du terminal A.

Le terminal A obtient une représentation du canal non-adjacent à partir de l'au moins un signal image du canal non-adjacent, et génère une séquence binaire représentative du canal non-adjacent. Il vient ensuite déterminer la clé secrète à partir d'une combinaison des séquences binaires représentatives de tous les canaux adjacents et non-adjacents.

Dans un mode de réalisation possible, un terminal peut réceptionner deux images d'un même canal non-adjacent, chacun transmis par l'un des deux terminaux reliés par le canal non adjacent. Toujours en prenant l'exemple du terminal A, celui-ci acquiert sur le canal C-A une image du canal B-C et sur le canal B-A une image du canal C-B.

Le terminal peut réaliser un traitement des deux images de canal non-adjacent pour générer la représentation du canal non-adjacent. Ce traitement peut par exemple mettre en oeuvre un échantillonnage et des intégrations cohérentes des signaux échantillonnés (i.e., une moyenne terme à terme des deux signaux).

Le terminal peut également exploiter ces deux images de canal non-adjacent pour évaluer une asymétrie de représentation de canal par chacun des terminaux reliés au canal non-adjacent. Cette asymétrie peut résulter d'erreurs d'estimation de canal ou simplement d'un changement des caractéristiques du canal au cours du temps.

Le terminal peut transmettre une information d'asymétrie de représentation de canal aux terminaux reliés par le canal non-adjacent, par exemple par l'intermédiaire d'un canal public (information non suffisante pour un attaquant). Ces terminaux pourront alors modifier la séquence binaire représentative de leur canal adjacent suite à la réception d'une telle information. Par exemple, l'un et/ou l'autre des terminaux B et C pourront modifier, par exemple par poinçonnage, leur séquence binaire représentative du canal B-C/C-B suite à une information transmise par A d'asymétrie de représentation du canal B-C/C-B.

Cette information d'asymétrie concerne par exemple des échantillons que le terminal A considère asymétriques dans les représentations issues des signaux acquis par les deux terminaux B, C reliés par le canal non-adjacent. Ces échantillons pourront être ignorés par ces terminaux dans leurs propres acquisitions.

Un terminal peut par ailleurs être amené à modifier une séquence binaire représentative d'un canal adjacent/non-adjacent suite à la réception d'une information de bande de garde. Cette modification est un rejet des échantillons proches de seuils de quantification. Une information relative aux échantillons rejetés peut être partagée avec les autres terminaux par l'intermédiaire du canal public.

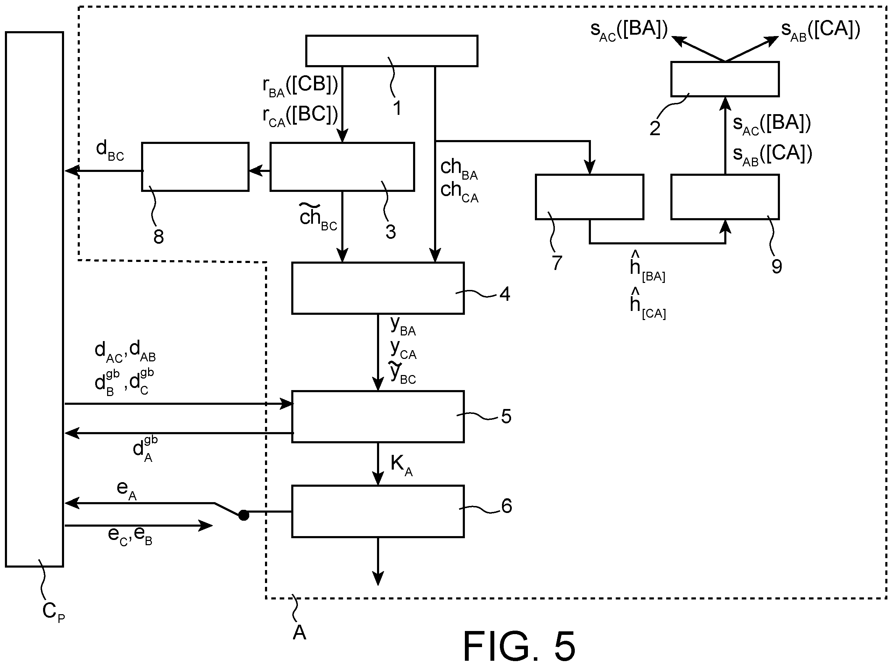

On a représenté sur la figure 5 un schéma d'un terminal de communication sans fil A apte à générer une clé secrète conformément au procédé selon l'invention. Il comprend une unité de réception 1 configurée pour recevoir des signaux depuis les canaux adjacents et une unité de transmission 2 configurée pour transmettre des signaux dans les canaux adjacents.

L'unité de réception 1 est notamment configurée pour recevoir les signaux de sondage $ch_{BA}$, $ch_{CA}$ des canaux adjacents, et pour recevoir, pour chaque canal non-adjacent, au moins une image du canal non-adjacent. Sur la figure 5, l'unité de réception 1 acquiert ainsi du canal B-A le signal de sondage $ch_{BA}$ et un signal

$r_{BA}([CB])$ image du canal non-adjacent C-B et du canal C-A le signal de sondage $ch_{CA}$ et un signal $r_{CA}([BC])$ image du canal non-adjacent B-C.

L'unité de transmission 2 est, quant elle, notamment configurée pour transmettre un signal de porteur d'une image de canal non-adjacent à chaque terminal non relié audit canal adjacent. Sur la figure 5, l'unité de transmission 2 transmet ainsi sur le canal A-B un signal $s_{AB}([CA])$ porteur d'une image du canal C-A non adjacent au terminal B et sur le canal A-C un signal $s_{AC}([BA])$ porteur d'une image du canal B-A non adjacent au terminal C.

Le terminal A comprend par ailleurs une unité d'extraction 3 configurée pour déterminer, pour chaque canal non-adjacent, une observation unique $\widetilde{ch}_{BC}$ à partir d'au moins une acquisition $r_{BA}([CB])$, $r_{CA}([BC])$ de signal image du canal non adjacent.

Le terminal A comprend par ailleurs une unité de génération de représentations de canaux 4 configurée pour générer des représentation des canaux adjacents $y_{BA}, y_{CA}$ à partir des signaux de sondage reçus $ch_{BA}, ch_{CA}$ depuis les canaux adjacents B-A, C-A, et pour générer une représentation d'un canal non-adjacent $\widetilde{y}_{BC}$ à partir de l'unique observation $\widetilde{ch}_{BC}$ du canal non-adjacent B-C issue de l'unité d'extraction 3.

Le terminal A comprend en outre un générateur de clé 5 configuré pour déterminer la clé secrète $K_A$ à partir d'une combinaison des représentations des canaux adjacents $y_{BA}$, $y_{CA}$ et d'une représentation $\widetilde{y}_{BC}$ de chaque canal non-adjacent.

Le générateur de clé 5 réalise par exemple une quantification de l'ensemble des échantillons en utilisant un dictionnaire binaire arbitraire. Dans un mode de réalisation possible, la quantification est réalisée après réception d'une information de bande de garde $d_B^{gb}$, $d_C^{gb}$ et rejet optionnel des échantillons proches de seuils de quantification. L'information relative aux échantillons rejetés $d_A^{gb}$ peut être partagée sur un canal public $C_P$.

Le terminal A comprend également une unité d'encodage/décodage 6 permettant d'appliquer un code correcteur d'erreur à la clé calculée $K_A$. Cette unité 6 est apte à échanger des informations sur un canal public $C_P$, en venant indiquer une information d'erreur $e_A$ affectant la clé $K_A$ ou récupérer une information d'erreur $e_B$ ou $e_C$ affectant la clé calculée par un autre terminal B ou C.

A titre d'exemple, le code correcteur d'erreur peut être un code LDPC ou un code Reed-Solomon. L'un des terminaux peut être désigné comme terminal principal en charge de générer un syndrome représentant sa clé et de l'envoyer sur le canal public $C_P$. Les autres terminaux exploitent alors cette information pour corriger leur clé par rapport à celle du terminal principal.

Le terminal A comprend par ailleurs une unité d'estimation de canal adjacent 7 configurée pour déterminer une estimation $\hat{h}_{[CA]}$, $\hat{h}_{[BA]}$ des canaux adjacents C-A, B-A à partir des signaux de sondage $ch_{CA}$, $ch_{BA}$.

Le terminal comprend une unité 9 de génération de signaux porteurs d'une image de canal non adjacent $s_{AB}([CA])$, $s_{AC}([BA])$ à partir des estimations, $\hat{h}_{[BA]}$, $\hat{h}_{[CA]}$ des canaux adjacents B-A, C-A et des acquisitions $ch_{CA}$, $ch_{BA}$ de ces canaux adjacents.

Cette unité 9 peut exploiter un algorithme d'optimisation des moindres carrés utilisant une connaissance préalable du signal recherché (par exemple une contrainte de lissage de ces dérivés) pour augmenter la stabilité de l'algorithme. L'unité 9 peut également exploiter un algorithme de maximisation d'espérance (Expectation Maximization, EM) qui peut conjointement déduire le signal recherché et les paramètres statistiques du modèle employé pour la déconvolution.

Le terminal A peut par ailleurs comprendre une unité 8 d'évaluation d'asymétrie de représentation de canal à partir des acquisitions $r_{AB}([CA])$, $r_{AC}([BA])$ des deux images d'un canal non-adjacent. Comme indiqué précédemment, cette unité 8 fournit une information d'asymétrie $d_{BC}$ qui peut concerner des échantillons que le terminal A considère asymétriques dans les signaux issus des représentations des deux terminaux reliés par le canal non-adjacent. Cette information $d_{BC}$ est communiquée sur le canal public $C_P$. Elle peut être utilisée par le générateur de clé 5 comme représenté sur la figure 5 par les informations $d_{AC}$ et $d_{AB}$ représentatives d'une asymétrie de représentation des canaux A-C et A-B.

L'invention trouve avantageusement application dans les réseaux exploitant la technologie sans fil Ultra Large Bande impulsionnelle (IR-UWB), notamment des réseaux de capteurs sans fil. Elle fournit en effet des signaux hautement entropiques du fait de ses capacités de résolution des multi-trajets.

Dans ce cadre, les signaux de sondage sont par exemple des signaux impulsionnels. L'estimation de canal adjacent peut être réalisée via un échantillonnage direct du signal reçu et une inter-corrélation numérique avec un modèle d'impulsion correspondant à la forme d'onde attendue de l'impulsion de sondage. L'estimation peut mettre en oeuvre des techniques permettant itérativement de détecter, estimer et ensuite soustraire les composants multi-trajets du signal acquis. L'estimation peut également exploiter des algorithmes de représentation parcimonieuse du canal (par exemple un algorithme de « compressed sensing » selon la terminologie anglo-saxonne), ou encore reposer sur une identification des multi-trajets basée sur l'énergie qui présente l'intérêt d'être moins complexe.

L'unité 4 de génération d'une représentation de canal peut précisément réaliser une intégration de l'énergie des signaux reçus (par exemple par mise au carré du signal et filtrage passe-bas) sur la durée d'une impulsion afin d'obtenir des échantillons décorrélés.

L'invention trouve également application dans les réseaux exploitant des signaux OFDM. Dans ce cadre, les signaux de sondage peuvent être des symboles pilotes OFDM et l'estimation de canal peut reposer sur un algorithme de recherche multidimensionnelle tel qu'un estimateur du temps d'arrivée le plus probable. Des exemples d'échantillons délivrés par l'unité 4 de génération d'une représentation de canal en vue de la quantification sont des informations de délai et d'amplitude, ou les coefficients OFDM de la réponse du canal.

## Revendications

1. Procédé de génération d'une clé secrète partagée par un groupe d'au moins trois terminaux (A, B, C) à partir de caractéristiques de canaux de communication sans fil reliant deux à deux lesdits terminaux, comprenant, à chacun desdits terminaux du groupe, la mise en oeuvre des étapes suivantes :

   - acquisition ($ch_{BA}$, $ch_{CA}$) de signaux depuis les canaux de communication sans fil, dits canaux adjacents, reliés au terminal et génération d'une représentation de chaque canal adjacent ($y_{BA}$, $y_{CA}$);
   - pour l'au moins un canal de communication sans fil, dit canal non-adjacent, non relié au terminal, acquisition d'au moins une image du canal non-adjacent ($r_{BA}([CB])$, $r_{CA}([BC])$) et génération d'une représentation du canal non-adjacent ($\tilde{y}_{BC}$),
   - détermination de la clé secrète ($K_A$) à partir d'une combinaison des représentations des canaux adjacents ($y_{BA}$, $y_{CA}$) et de l'au moins une représentation de canal non-adjacent ($\tilde{y}_{BC}$).

2. Procédé selon la revendication 1, comprenant en outre à un terminal dit émetteur les étapes suivantes :

   - estimation d'un canal adjacent ($\hat{h}_{[CA]}$, $\hat{h}_{[BA]}$) reliant le terminal émetteur à un terminal destinataire à partir des signaux acquis depuis le canal adjacent ($ch_{CA}$, $ch_{BA}$);
   - génération d'un signal porteur d'une image d'un canal non-adjacent du terminal destinataire ($s_{AB}([CA])$, $s_{AC}([BA])$) à partir des signaux acquis ($ch_{CA}$, $ch_{BA}$) par le terminal émetteur depuis le canal non-adjacent du terminal destinataire et de l'estimation du canal adjacent ($\hat{h}_{[BA]}$, $\hat{h}_{[CA]}$) reliant le terminal émetteur et le terminal destinataire; et
   - transmission dudit signal porteur d'une image de canal non-adjacent au terminal destinataire.

3. Procédé selon l'une des revendications 1 et 2, comprenant deux acquisitions ($r_{BA}([CB])$, $r_{CA}([BC])$) par un terminal, pour un canal non-adjacent, d'une image du canal non-adjacent, chaque acquisition étant respectivement issue d'une transmission par l'un des deux terminaux reliés par le canal non adjacent.

4. Procédé selon la revendication 3, dans lequel le terminal réalise un traitement des deux acquisitions d'une image du canal non-adjacent pour générer une unique représentation du canal non-adjacent.

5. Procédé selon l'une des revendications 3 et 4, dans lequel le terminal évalue une asymétrie de représentation de canal à partir des deux acquisitions d'une image du canal non-adjacent, et transmet une information d'asymétrie de représentation de canal ($d_{BC}$) aux terminaux reliés par le canal non-adjacent.

6. Procédé selon la revendication 5, dans lequel le terminal modifie une représentation de canal adjacent suite à la réception d'une information d'asymétrie de représentation de canal ($d_{AC}$, $d_{AB}$).

7. Procédé selon la revendication 6, dans lequel la modification de la représentation de canal adjacent comprend un poinçonnage.

8. Procédé selon l'une des revendications 1 à 7, comprenant en outre l'application d'un code correcteur d'erreur à une séquence binaire issue de la combinaison des représentations quantifiées des canaux adjacents et de l'au moins une représentation quantifiée de canal non-adjacent.

9. Procédé selon l'une des revendications 1 à 8, dans lequel la combinaison est une concaténation.

10. Terminal de communication sans fil (A) apte à générer une clé secrète ($K_A$) à partir de caractéristiques de canaux de communication sans fil reliant deux à deux des terminaux d'un groupe comprenant le terminal et au moins deux autres terminaux, comprenant :

    - une unité de réception (1) configurée pour :

      ◦ acquérir des signaux ($ch_{BA}$, $ch_{CA}$) depuis des canaux de communication sans fil, dits canaux adjacents, reliés au terminal ; et
      ◦ acquérir pour l'au moins un canal, dit canal non-adjacent, non relié au terminal, au moins une image du canal non-adjacent ($r_{BA}([CB])$, $r_{CA}([BC])$);

    - une unité de génération de représentations de canaux (4) configurée

      ◦ pour générer une représentation de chaque canal adjacent ($y_{BA}$, $y_{CA}$) à partir des signaux acquis depuis chaque canal adjacent ;

∘ pour l'au moins un canal non-adjacent, pour générer une représentation de canal non-adjacent ($\tilde{y}_{BC}$) à partir de l'acquisition de l'au moins une image du canal non-adjacent ;

- un générateur de clé (5) configuré pour déterminer la clé secrète ($K_A$) à partir d'une combinaison des représentations des canaux adjacents et de l'au moins une représentation de canal non-adjacent.

## Patentansprüche

1. Verfahren zur Erzeugung eines geheimen Schlüssels, der von einer Gruppe von wenigstens drei Terminals (A, B, C) geteilt wird, ausgehend von Eigenschaften von drahtlosen Kommunikationskanälen, die die Terminals paarweise verbinden, umfassend bei jedem der Terminals der Gruppe die Durchführung der folgenden Schritte:

   - Erfassen ($ch_{BA}$, $ch_{CA}$) von Signalen von den drahtlosen Kommunikationskanälen, genannt benachbarte Kanäle, die mit dem Terminal verbunden sind, und Erzeugen einer Darstellung jedes benachbarten Kanals ($y_{BA}$, $y_{CA}$);
   - für wenigstens einen drahtlosen Kommunikationskanal, genannt nicht benachbarter Kanal, der nicht mit dem Terminal verbunden ist, Erfassen wenigstens eines Bilds des nicht benachbarten Kanals ($r_{BA}$ ([CB]), $r_{CA}$ ([BC])) und Generieren einer Darstellung des nicht benachbarten Kanals ($\tilde{y}_{BC}$),
   - Bestimmen des geheimen Schlüssels ($K_A$) ausgehend von einer Kombination der Darstellungen der benachbarten Kanäle ($y_{BA}$, $y_{CA}$) und der wenigstens einen Darstellung des nicht benachbarten Kanals ($\tilde{y}_{BC}$).

2. Verfahren nach Anspruch 1, ferner umfassend bei einem als Sender bezeichneten Terminal die folgenden Schritte:

   - Abschätzen eines benachbarten Kanals ($\hat{h}_{[CA]}$, $\hat{h}_{[BA]}$), der das Sender-Terminal mit einem Ziel-Terminal verbindet, ausgehend von den Signalen, die von dem benachbarten Kanal ($ch_{CA}$, $ch_{BA}$) erfasst werden;
   - Erzeugen eines Trägersignals eines Bilds eines nicht benachbarten Kanals des Ziel-Terminals ($s_{AB}$ ([CA]), $s_{AC}$ ([BA])) ausgehend von den erfassten Signalen ($ch_{CA}$, $ch_{BA}$) durch das Sender-Terminal von dem nicht benachbarten Kanal des Ziel-Terminals und der Abschätzung des benachbarten Kanals ($\hat{h}_{[BA]}$, $\hat{h}_{[CA]}$), der das Sender-Terminal und das Ziel-Terminal verbindet; und
   - Übertragen des Trägersignals eines Bilds des nicht benachbarten Kanals an das Ziel-Terminal.

3. Verfahren nach einem der Ansprüche 1 und 2, umfassend zwei Erfassungen ($r_{BA}$ ([CB]), $r_{CA}$ ([BC])) durch ein Terminal, für einen nicht benachbarten Kanal, eines Bildes des nicht benachbarten Kanals, wobei jede Erfassung jeweils aus einer Übertragung durch eines der zwei Terminals hervorgeht, die durch den nicht benachbarten Kanal verbunden sind.

4. Verfahren nach Anspruch 3, bei dem das Terminal eine Verarbeitung der zwei Erfassungen eines Bilds des nicht benachbarten Kanals durchführt, um eine einzige Darstellung des nicht benachbarten Kanals zu generieren.

5. Verfahren nach einem der Ansprüche 3 bis 4, bei dem das Terminal eine Asymmetrie der Darstellung des Kanals bewertet ausgehend von den zwei Erfassungen eines Bilds des nicht benachbarten Kanals, und eine Information über die Asymmetrie der Darstellung des Kanals ($d_{BC}$) an die Terminals überträgt, die durch den nicht benachbarten Kanal verbunden sind.

6. Verfahren nach Anspruch 5, bei dem das Terminal eine Darstellung des benachbarten Kanals im Anschluss an den Empfang einer Information über die Asymmetrie der Darstellung des Kanals ($d_{AC}$, $d_{AB}$) modifiziert.

7. Verfahren nach Anspruch 6, bei dem die Modifikation der Darstellung des benachbarten Kanals eine Stempelung umfasst.

8. Verfahren nach einem der Ansprüche 1 bis 7, ferner umfassend die Anwendung eines Fehlerkorrekturcodes bei einer binären Sequenz, die hervorgeht aus der Kombination der quantisierten Darstellungen der benachbarten Kanäle und der wenigstens einen quantisierten Darstellung des nicht benachbarten Kanals.

9. Verfahren nach einem der Ansprüche 1 bis 8, bei dem die Kombination eine Verkettung ist.

10. Drahtloses Kommunikationsterminal (A), das dazu ausgelegt ist, einen geheimen Schlüssel ($K_A$) zu generieren ausgehend von Eigenschaften von drahtlosen Kommunikationskanälen, die paarweise Terminals einer Gruppe verbinden, die das Terminal und wenigstens zwei andere Terminals umfasst, umfassend:

- eine Empfangseinheit (1), die zu Folgendem ausgelegt ist:

  ◦ Erfassen der Signale ($ch_{BA}$, $ch_{CA}$) von drahtlosen Kommunikationskanälen, genannt benachbarte Kanäle, die mit dem Terminal verbunden sind; und
  ◦ für wenigstens einen Kanal, genannt nicht benachbarter Kanal, der nicht mit dem Terminal verbunden ist, Erfassen wenigstens eines Bilds des nicht benachbarten Kanals ($r_{BA}$ ([CB]),$r_{CA}$ ([BC]));

- eine Einheit (4) zur Generierung von Kanaldarstellungen, die zu Folgendem ausgelegt ist:

  ◦ zum Generieren einer Darstellung jedes benachbarten Kanals ($y_{BA}$, $y_{CA}$) ausgehend von Signalen, die von jedem benachbarten Kanal erfasst sind;
  ◦ für den wenigstens einen nicht benachbarten Kanal, zum Generieren einer Darstellung des nicht benachbarten Kanals ($\tilde{y}_{BC}$) ausgehend von der Erfassung des wenigstens einen Bildes des nicht benachbarten Kanals;

- einen Schlüsselgenerator (5), der dazu ausgelegt ist, den geheimen Schlüssel ($K_A$) zu bestimmen ausgehend von einer Kombination der Darstellungen der benachbarten Kanäle und der wenigstens einen Darstellung des nicht benachbarten Kanals.

**Claims**

1. A method for generating a secret key shared by a group of at least three terminals (A, B, C) from characteristics of wireless communication channels connecting said terminals by pairs, comprising, at each of said terminals of the group, the implementation of the following steps of:

   - acquiring ($ch_{BA}$, $ch_{CA}$) signals from the wireless communication channels, called adjacent channels, connected to the terminal and generating a representation of each adjacent channel ($y_{BA}$, $y_{CA}$);
   - for the at least one wireless communication channel, called non-adjacent channel, not connected to the terminal, acquiring at least one image of the non-adjacent channel ($r_{BA}$([CB]), $r_{CA}$([BC])) and generating a representation of the non-adjacent channel ($\tilde{y}_{BC}$),
   - determining the secret key ($K_A$) from a combination of the representations of the adjacent channels ($y_{BA}$, $y_{CA}$) and the at least one representation of the non-adjacent channel ($\tilde{y}_{BC}$).

2. The method according to claim 1, further comprising at a terminal called transmitting terminal the following steps of:

   - estimating an adjacent channel ($\hat{h}_{[CA]}$, $\hat{h}_{[BA]}$) connecting the transmitting terminal to a destination terminal from the signals acquired from the adjacent channel ($ch_{CA}$, $ch_{BA}$);
   - generating a signal carrying an image of a non-adjacent channel of the destination terminal ($s_{AB}$([CA]), $s_{AC}$([BA])) from the signals ($ch_{AC}$, $ch_{BA}$) acquired by the transmitting terminal from the non-adjacent channel of the destination terminal and from the estimation of the adjacent channel ($\hat{h}_{[BA]}$, $\hat{h}_{[CA]}$) connecting the transmitting terminal and the destination terminal; and
   - transmitting said signal carrying an image of a non-adjacent channel to the destination terminal.

3. The method according to one of claims 1 and 2, comprising two acquisitions ($r_{BA}$([CB]), $r_{CA}$([BC])) by one terminal, for a non-adjacent channel, of an image of the non-adjacent channel, each acquisition respectively coming from a transmission by one of both terminals connected by the non-adjacent channel.

4. The method according to claim 3, wherein the terminal performs a processing of both acquisitions of an image of the non-adjacent channel for generating a single representation of the non-adjacent channel.

5. The method according to one of claims 3 and 4, wherein the terminal assesses a channel representation asymmetry from both acquisitions of an image of the non-adjacent channel, and transmits channel representation asymmetry information ($d_{BC}$) to the terminals connected by the non-adjacent channel.

6. The method according to claim 5, wherein the terminal modifies a representation of adjacent channel following reception of channel representation asymmetry information ($d_{AC}$, $d_{AB}$).

7. The method according to claim 6, wherein the modification of the representation of the adjacent channel comprises a puncturing.

8. The method according to one of claims 1 to 7, further comprising applying an error correcting code to a binary sequence coming from the combination of the quantized representations of the adjacent channels and the at least one quantized representation of non-adjacent channel.

9. The method according to one of claims 1 to 8, wherein the combination is a concatenation.

**10.** A wireless communication terminal (A) able to generate a secret key ($K_A$) from characteristics of wireless communication channels connecting to each other two terminals of a group comprising the terminal and at least two other terminals, comprising:

- a receiving unit (1) configured to:

∘ acquire signals ($ch_{BA}$, $ch_{CA}$) from the wireless communication channels, called adjacent channels, connected to the terminal; and

∘ acquire for the at least one channel, called non-adjacent channel, non connected to the terminal, at least one image of the non-adjacent channel ($r_{BA}([CB])$, $r_{CA}([BC])$);

- a channel representation generating unit (4) configured to:

∘ generate a representation of each adjacent channel ($y_{BA}$, $y_{CA}$) from the signals acquired from each adjacent channel;

∘ for the at least one non-adjacent channel, generate a representation of non-adjacent channel ($\tilde{y}_{BC}$) from the acquisition of the at least one image of the non-adjacent channel;

- a key generator (5) configured to determine the secret key ($K_A$) from a combination of the representations of the adjacent channels and the at least one representation of non-adjacent channel.

**FIG. 1**

**FIG. 2**

(B)

(3a)

(A)

(C)

(3b)

# FIG. 3

(B)

(A)

# FIG. 4

(C)

(4a)

(4b)

101010101

FIG. 5

EP 3 131 229 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080075280 A1
- WO 2008045532 A2